# EUROPÄISCHE PATENTSCHRIFT

(11) **EP 1 717 573 B1**
(45) Veröffentlichungstag und Bekanntmachung des Hinweises auf die Patenterteilung: **09.11.2011**
(21) Anmeldenummer: 06009093.3
(22) Anmeldetag: 02.05.2006
(51) Int. Cl.: G01N 23/04

(54) **Verfahren zur automatischen Fehlererkennung in Prüfteilen mittels einer Röntgenprüfanlage**
Method for automatic detection of faults in test parts by means of an X-ray test system
Procédé destiné à la reconnaissance automatique d'anomalies dans des éléments d'examen à l'aide d'un dispositif d'examen radiographique

(30) Priorität: 29.04.2005 DE 102005020149
(43) Veröffentlichungstag der Anmeldung: 02.11.2006
(73) Patentinhaber: YXLON International X-Ray GmbH, 22419 Hamburg (DE)
(72) Erfinder: Bavendiek, Klaus, Dr., 22851 Norderstedt (DE); Herold, Frank, 22926 Ahrensburg (DE)
(74) Vertreter: DTS München

(56) Entgegenhaltungen:
- EP-A- 1 148 333
- EP-A- 1 191 827
- EP-A1- 1 248 272
- DE-A1- 3 113 440
- DE-A1- 4 202 113
- KAROLCZAK MAREK ET AL: "Implementation of a cone-beam reconstruction algorithm for the single-circle source orbit with embedded misalignment correction using homogeneous coordinates" MEDICAL PHYSICS, AIP, MELVILLE, NY, US, Bd. 28, Nr. 10, Oktober 2001 (2001-10), Seiten 2050-2069, XP012011303 ISSN: 0094-2405

## Beschreibung

Die Erfindung befasst sich mit einem Verfahren zur automatischen Fehlererkennung in Prüfteilen mittels einer Röntgenprüfanlage mit einer Röntgenröhre, einem Detektor und einem mechanischen Manipulator zur Positionierung des Prüfteils im Strahlengang der Röntgenprüfanlage, wobei ein Positionierbild des Prüfteils mit einem idealen Referenzbild verglichen wird.

Bei der automatischen Fehlererkennung von Prüfteilen mittels zerstörungsfreier Analyse wird ein Röntgenbild des Prüfteils mit einem Röntgenbild eines fehlerfreien anderen Prüfteils, das als Röntgenreferenzbild dient, verglichen. Die Entscheidung, ob ein defektes Prüfteil vorliegt oder nicht, wird allein anhand des automatischen Vergleichs zwischen diesem Röntgenreferenzbild und dem Röntgenbild des Prüfteils vorgenommen, ohne dass der Mensch hierbei eingreift. Auf der einen Seite muss dabei jedes fehlerhafte Prüfteil zwingend erkannt werden, aber auf der anderen Seite sollten möglichst wenig Fehldetektionen erfolgen - bei denen eigentlich fehlerfreie Prüfteile als fehlerbehaftet erkannt werden, da das Bild des Prüfteils zu stark vom Referenzbild abweicht.

Solche Fehldetektionen treten häufig bei Positionierungsungenauigkeiten des Prüfteils auf, so dass das von diesem erstellte Vergleichsbild gegenüber dem Referenzbild verschoben und/oder verdreht aufgenommen wurde. Aufgrund der vielen Freiheitsgrade bei der Positionierung des Prüfteils in der Röntgenprüfanlage ist dies eher die Regel als die Ausnahme. Wird beispielsweise ein Roboter zum Greifen und Positionieren des Prüfteils verwendet, so liegen schon allein beim Greifen des Prüfteils sechs Freiheitsgrade vor. Bei der Verwendung eines Palettensystems gibt es ebenfalls sechs Freiheitsgrade bezüglich der Lagetoleranz des Prüfteils auf der Palette aufgrund natürlicher Prüfteiltoleranz (Translation in drei Richtungen und Rotation um jede Achse der Translation); allerdings in sehr viel geringerem Maße als beim Greifen. Bei einer Räderanlage liegen drei Freiheitsgrade aufgrund der Einförderungs- und Manipulator-Toleranz vor. Dazu treten jeweils noch die Bauteil-Toleranzen aus der Fertigung.

Bisher wird dieses Problem dadurch gelöst, dass anhand markanter Punkte jeweils im Vergleichsbild des Prüfteils und des Referenzbildes die Bildverarbeitungsregionen angepasst - regelmäßig verschoben - werden. Hierbei können allerdings nur drei Freiheitsgrade korrigiert werden und durch die Stützung auf nur wenige markante Stellen im Vergleichsbild und im Referenzbild ist die Korrektur auch nur für diese markanten Stellen im Vergleichsbild optimal. Dies ergibt sich daraus, dass in einem zweidimensionalen Bild grundsätzlich nur die Translation in zwei Richtungen und die Rotation auf der Ebene korrigiert werden, da es sonst zu einem signifikanten Verlust an Bildinformation kommen kann. Ansonsten müssten dreidimensionale Informationen über das Prüfteil zur Verfügung stehen. An den anderen Stellen kann zwischen dem Vergleichsbild und dem Referenzbild eine größere Abweichung auftreten, was regelmäßig zu einem hohen Anteil an Fehldetektionen führt.

In der EP 1191827 ist ein Röntgen-Fehlererkennungsverfahren beschrieben, wo mehrere Bilder eines Prüfteils durch einen Benutzer miteinander verglichen werden und die an Hand eines ersten Bildes ermittelten Positionswerte an eine automatische Positioniereinrichtung gegeben werden, um das Prüfteil geeignet zu positionieren.

Eine andere bisher praktizierte Methode besteht darin, dass durch einen Ähnlichkeitstransformation zwischen dem Referenzbild und dem Vergleichsbild des Prüfteils die Positionierungsungenauigkeit pixelweise zum Referenzbild korrigiert wird. Eine solche Methode ist sehr rechenaufwendig. Hierbei wird zwar eine Korrektur über das gesamte Vergleichsbild vorgenommen, allerdings können noch Abweichungen vom Soll auftreten, die die Erkennbarkeit von Fehlern einschränken.

Aufgabe der Erfindung ist es deshalb, ein zuverlässigeres Verfahren zur automatischen Fehlererkennung zur Verfügung zu stellen mit weniger Fehldetektionen als bei den bekannten Verfahren.

Die Aufgabe wird durch ein Verfahren mit den Merkmalen des Patentanspruchs 1 gelöst. Nach der exakten Berechnung, um welche Drehachse und um welchen Drehwinkel das Positionierbild des Prüfteils gedreht werden muss und um welchen Verschiebungsvektor es verschoben werden muss, um eine exakte Überdeckung mit dem Referenzbild zu erreichen, werden diese Werte nicht - wie im Stand der Technik - dafür hergenommen, das Positionierbild auf die Koordinaten des Referenzbildes umzurechnen und dann eine Vergleichsanalyse vorzunehmen. Erfindungsgemäß ist vielmehr vorgesehen, dass diese gewonnenen Werte (der Drehachse, des Drehwinkels und des Verschiebungsvektors) an den mechanischen Manipulator weitergegeben werden. Der mechanische Manipulator überführt dann das Prüfteil in die entsprechende Position. In dieser Position wird vom Prüfteil ein Vergleichsbild in der Röntgenprüfanlage erzeugt. Dieses Vergleichsbild ist dann im Rahmen der Prüfteiltoleranzen deckungsgleich mit einem Röntgenreferenzbild, das zu dem idealen Referenzbild eines fehlerlosen Prüfteils gehört. Das so aufgenommene Vergleichsbild kann dann ohne jegliche Umrechnung - wie dies bislang im Stand der Technik nötig war - mit einer bekannten Bildverarbeitung mit dem Röntgenreferenzbild des fehlerfreien Prüfteils verglichen werden. Da die Bildverarbeitung nicht Gegenstand der Erfindung ist, sondern dieser lediglich nachgeschaltet ist und aus dem Stand der Technik hinreichend bekannt ist, wird hierauf nicht näher eingegangen. Durch das erfindungsgemäße Verfahren ist eine äußerst genaue Positionierung des Prüfteils möglich, da die Mechanik hochgradig genau die gewünschte Position anfahren kann. Da dann wie oben ausgeführt eine optimale Überdeckung zwischen dem Vergleichsbild des Prüfteils und dem Röntgenreferenzbild besteht, gibt es hauptsächlich Detektionen aufgrund von Materialfehlern und Prüfteiltoleranzen und nur eine minimale Anzahl von Fehldetektionen aufgrund von Mängeln in der geometrischen Ausrichtung des Prüfteils.

Eine vorteilhafte Weiterbildung der Erfindung sieht vor, dass das Röntgenreferenzbild und das ideale Referenzbild ein übereinstimmendes Röntgenbild eines fehlerfreien Prüfteils sind. Da in diesem Fall sowohl das Röntgenreferenzbild als auch das ideale Referenzbild Röntgenbilder sind, müssen nicht zwei unterschiedliche Referenzbilder eines fehlerfreien Prüfteils aufgenommen werden. Da das Positionierbild des Prüfteils ebenfalls ein Röntgenbild ist, kann schon die Überprüfung der Position des Prüfteils innerhalb der Röntgenprüfanlage durchgeführt werden. Dadurch ist es nicht nötig, außerhalb der Röntgenprüfanlage eine zusätzliche Vorrichtung zum Aufnehmen des Positionierbildes des Prüfteils vorzusehen und ein diesem entsprechendes ideales Referenzbild zusätzlich zum Röntgenreferenzbild des fehlerfreien Prüfteils zur Verfügung zu stellen. Dieser verminderte Aufwand wird jedoch durch eine erhöhte Verweilzeit des Prüfteils innerhalb der Röntgenprüfanlage und somit einem geringeren Durchsatz erkauft, da ein zusätzlicher Bildeinzug mit anschließender Auswertung und Berechnung der Änderungsparameter sowie der mechanischen Korrektur nötig sind. Diese Zeit fällt für jedes Prüfteil wieder von neuem an.

Eine andere vorteilhafte Weiterbildung der Erfindung sieht vor, dass das Positionierbild mittels sichtbaren Lichts oder Röntgenstrahlung gewonnen wird, ebenso wie das ideale Referenzbild. Dadurch kann der gerade beschriebene geringe Durchsatz gesteigert werden, da die Erfassung der Position des Prüfteils schon außerhalb der Röntgenprüfanlage erfolgen kann. Hierfür kann eine Bildverarbeitung mittels einer Beleuchtung und einer Stereokameratechnik erfolgen. Da dies parallel zur Prüfung des Prüfteils innerhalb der Röntgenprüfanlage erfolgen kann, wird eine signifikante Zeitersparnis und damit ein höherer Durchsatz an Prüfteilen ermöglicht. Mit Hilfe eines geeigneten Musters - sei es beispielsweise fest durch Materialauftrag, Materialabtrag oder ein Stempelverfahren bzw. virtuell durch Beleuchtung - wird dabei die sonst - dem Stand der Technik entsprechende - fehleranfällige Korrespondenzsuche der Stereoskopie für das erfindungsgemäße Verfahren effizient und robust unter Echtzeitbedingungen gelöst.

Hierbei wird die Ermittlung der Abweichung zwischen dem Positionierbild des Prüfteils und dem idealen Referenzbild an den mechanischen Manipulator weitergegeben, der dann automatisch beim Positionieren des Prüfteils innerhalb der Röntgenprüfanlage das Prüfteil an die vorgegebene Stelle mit den berechneten Parametern für die deckungsgleiche Überführung bringt, so dass dann die erfindungswesentliche Aufnahme des Vergleichsbilds des Prüfteils erfolgen kann, welches sich mit dem Röntgenreferenzbild des fehlerfreien Prüfteils in seiner Lage optimal überdeckt.

Besonders vorteilhaft ist es, wenn als mechanischer Manipulator ein Greifarm verwendet wird, der die berechneten Werte für die Drehachse, den Drehwinkel und den Verschiebungsvektor über geeignete Steuerbefehle erhält. Solche Roboter sind aus dem Stand der Technik sehr gut bekannt und mit einer hochgradigen Präzision hinsichtlich ihrer Positionierung ansteuerbar. Damit wird abgesehen von Prüfteiltoleranzen eine beinahe einhundertprozentige Überdeckung zwischen dem Vergleichsbild des Prüfteils und dem Röntgenreferenzbild des fehlerfreien Prüfteils erreicht.

Zusammenfassend kann gesagt werden, dass durch ein erfindungsgemäßes Verfahren - das sich grundlegend von den bislang praktizierten Verfahren zur automatischen Fehlererkennung unterscheidet - die Anzahl an Fehldetektionen drastisch gesenkt werden kann, da nicht mehr eine "virtuelle" Lagekorrektur des in der Röntgenprüfanlage unter einem eventuell unter anderen Winkeln und leicht bis signifikant geänderten Bedingungen aufgenommenen Röntgenbildes des Prüfteils erfolgen muss. Es wird hier vielmehr eine mechanische Korrektur der Position des Prüfteils vorgenommen, so dass dessen Vergleichsbild abgesehen von natürlichen Prüfteiltoleranzen nahezu 100%-ig hinsichtlich der Durchleuchtungswinkel und der Positionierung mit dem Röntgenreferenzbild des fehlerfreien Prüfteils übereinstimmt. Dadurch wird die Durchführung einer sehr einfachen, sich an die Erfindung anschließenden Bildverarbeitung mit Fehlererkennung ermöglicht.

## Patentansprüche

1. Verfahren zur automatischen Fehlererkennung in Prüfteilen mittels einer Röntgenprüfanlage mit einer Röntgenröhre, einem Detektor und einem mechanischen Manipulator zur Positionierung des Prüfteils im Strahlengang der Röntgenprüfanlage, wobei ein Positionierbild des Prüfteils mit einem idealen Referenzbild verglichen wird, **dadurch gekennzeichnet, dass**
die Drehachse, der Drehwinkel und der Verschiebungsvektor berechnet werden, um eine exakte Überdeckung des Positionierbildes des Prüfteils mit dem idealen Referenzbild, das von einem fehlerfreien Prüfteil stammt, zu erreichen,
danach die Werte der Drehachse, des Drehwinkels und des verschiebungsvektors an den mechanischen Manipulator weitergegeben werden und dieser das Prüfteil in die diesen Werten entsprechende Position überführt und in dieser Position ein Vergleichsbild des Prüfteils mittels Röntgenstrahlen in der Röntgenprüfanlage erzeugt wird, das zum Vergleich mit einem Röntgenreferenzbild, das von dem genannten fehlerfreien Prüfteil stammt, dient,
und dann das Röntgen-Vergleichsbild des Prüfteils mit dem Röntgenreferenzbild des genannten fehlerfreien Prüfteils verglichen wird.

2. Verfahren nach Patentanspruch 1, **dadurch gekennzeichnet, dass** das Röntgenreferenzbild und das ideale Referenzbild ein und dasselbe übereinstimmende Röntgenbild eines fehlerfreien Prüfteils sind und das Positionierbild ein Röntgenbild ist.

3. Verfahren nach Patentanspruch 1, **dadurch gekennzeichnet, dass** das Positionierbild mittels sichtbaren Lichts gewonnen wird, ebenso wie das ideale Referenzbild.

4. Verfahren nach Patentanspruch 3, **dadurch gekennzeichnet, dass** das Positionierbild mittels einer Beleuchtung und einer Stereokameratechnik aufgenommen wird.

5. Verfahren nach Patentanspruch 4, **dadurch gekennzeichnet, dass** die Korrespondenzsuche der Stereoskopie mit Hilfe eines geeigneten Musters erfolgt, das fest, beispielsweise durch Materialauftrag, Materialabtrag oder ein Stempelverfahren, bzw. virtuell durch Beleuchtung auf das Prüfteil aufgebracht wird.

6. Verfahren nach einem der vorstehenden Patentansprüche, **dadurch gekennzeichnet, dass** das ideale Referenzbild und das Positionierbild des Prüfteils miteinander verglichen werden, während ein anderes Prüfteil in der Röntgenprüfanlage geprüft wird.

7. Verfahren nach einem der vorstehenden Patentansprüche, **dadurch gekennzeichnet, dass** als mechanischer Manipulator ein Greifarm verwendet wird, der die berechneten Werte für die Drehachse, den Drehwinkel und den Verschiebungsvektor über geeignete Steuerungsbefehle erhält.

## Claims

1. Method for automatic defect recognition in testpieces by means of an X-ray examination unit with an X-ray tube, a detector and a mechanical manipulator for positioning the testpiece in the beam path of the X-ray examination unit, wherein a positioning image of the testpiece is compared with an ideal reference image,
**characterized in that**
the axis of rotation, the angle of rotation and the displacement vector are calculated in order to arrive at an exact congruence of the positioning image of the testpiece with the ideal reference image, originating from a defect-free testpiece,
the values of the axis of rotation, angle of rotation and displacement vector are then relayed to the mechanical manipulator and the latter then transfers the testpiece into the position corresponding to these values and in this position a comparison image of the testpiece, which serves for comparison with an X-ray reference image originating from said defect-free testpiece, is produced by means of X-ray beams in the X-ray examination unit,
and afterwards the X-ray comparison image of the testpiece is compared to the X-ray reference image of said defect-free testpiece.

2. Method according to claim 1, **characterized in that** the X-ray reference image and the ideal reference image are one and the same coincident X-ray image of a defect-free testpiece and the positioning image is an X-ray image.

3. Method according to claim 1, **characterized in that** the positioning image is obtained, like the ideal reference image, by means of visible light.

4. Method according to claim 3, **characterized in that** the positioning image is recorded by means of lights and a stereoscopic camera technique.

5. Method according to claim 4, **characterized in that** the search for correspondence using stereoscopy is carried out with the help of a suitable pattern the application of which to the testpiece is solid, for example by means of material deposition, material removal or a stamping procedure, or virtual using lights.

6. Method according to one of the previous claims, **characterized in that** the ideal reference image and the positioning image of the testpiece are compared with each other while another testpiece is examined in the X-ray examination unit.

7. Method according to one of the previous claims, **characterized in that** there is used as mechanical manipulator a gripping arm which receives the calculated values for the axis of rotation, the angle of rotation and the displacement vector via appropriate control commands.

## Revendications

1. Procédé destiné à la reconnaissance automatique d'anomalies dans des éléments d'examen à l'aide d'un dispositif d'examen radiographique doté d'un tube à rayons X, d'un détecteur et d'un manipulateur mécanique en vue de positionner l'élément d'examen dans la trajectoire du faisceau du dispositif d'examen radiographique, une image de positionnement de l'élément d'examen étant comparée à une image de référence idéale,
**caractérisé en ce que** :
l'axe de rotation, l'angle de rotation et le vecteur de déplacement sont calculés pour permettre d'obtenir un chevauchement exact de l'image de positionnement de l'élément d'examen d'avec une image de référence idéale réalisée à partir d'un élément d'examen exempt d'anomalie ;
les valeurs de l'axe de rotation, de l'angle de rotation et du vecteur de déplacement sont ensuite transmises au manipulateur mécanique et celui-ci décale l'élément d'examen dans la position correspondant à ces valeurs ;
et une image de comparaison de l'élément d'examen est produite dans cette position dans le dispositif d'examen radiographique à l'aide des rayons X pour réaliser une comparaison avec une radiographie de référence réalisée à partir dudit élément d'examen exempt d'anomalie ;
et la radiographie de comparaison de l'élément d'examen est comparée à la radiographie de référence dudit élément d'examen exempt d'anomalie.

2. Procédé selon la revendication 1, **caractérisé en ce que** la radiographie de référence et l'image de référence idéale sont une seule et même radiographie concordante d'un élément d'examen exempt d'anomalie et que l'image de positionnement est une radiographie.

3. Procédé selon la revendication 1, **caractérisé en ce que** l'image de positionnement ainsi que l'image de référence idéale sont réalisées à l'aide de lumière visible.

4. Procédé selon la revendication 3, **caractérisé en ce que** l'image de positionnement est prise à l'aide d'un éclairage et par le biais d'une technique de caméra stéréoscopique.

5. Procédé selon la revendication 4, **caractérisé en ce que** la recherche de correspondance de la stéréoscopie est réalisée à l'aide d'un modèle adapté qui est appliqué fixement, par exemple par application de matière ou retrait de matière ou par le biais d'un procédé d'estampage, et/ou virtuellement, par éclairage de l'élément d'examen.

6. Procédé selon l'une quelconque des revendications précédentes, **caractérisé en ce que** l'image de référence idéale et l'image de positionnement de l'élément d'examen sont comparées entre elles en même temps qu'un autre élément d'examen est examiné dans le dispositif d'examen radiographique.

7. Procédé selon l'une quelconque des revendications précédentes, **caractérisé en ce que** le manipulateur mécanique utilisé est un bras de préhension qui reçoit les valeurs calculées pour l'axe de rotation, l'angle de rotation et le vecteur de déplacement par le biais des ordres de commande adaptés.
